# EUROPÄISCHE PATENTSCHRIFT

(11) **EP 3 978 360 B1**
(45) Veröffentlichungstag und Bekanntmachung des Hinweises auf die Patenterteilung: **01.11.2023**
(21) Anmeldenummer: 21200263.8
(22) Anmeldetag: 30.09.2021
(51) Int. Cl.: B64C 1/14

(54) **FENSTERRAHMEN FÜR EIN FAHRZEUG UND VERFAHREN ZUM HERSTELLEN EINES FENSTERRAHMENS**
WINDOW FRAME FOR A VEHICLE AND METHOD FOR PRODUCING A WINDOW FRAME
CADRE DE FENÊTRE POUR UN VÉHICULE ET PROCÉDÉ DE FABRICATION D'UN CADRE DE FENÊTRE

(30) Priorität: 30.09.2020 DE 102020125610
(43) Veröffentlichungstag der Anmeldung: 06.04.2022
(73) Patentinhaber: Premium AEROTEC GmbH, 86179 Augsburg (DE)
(72) Erfinder: Mauro, Pasquale, 86179 Augsburg (DE)
(74) Vertreter: LKGLOBAL Lorenz & Kopf Patentanwalt Attorney at Law PartG mbB

(56) Entgegenhaltungen:
- EP-A1- 3 199 448
- WO-A1-2005/115841
- DE-A1-102010 013 714
- DE-A1-102017 128 343

## Beschreibung

### TECHNISCHES GEBIET

Die Erfindung betrifft einen Fensterrahmen für ein Fahrzeug.

### HINTERGRUND DER ERFINDUNG

Fahrzeuge für den Transport von Passagieren besitzen üblicherweise einen Fahrzeugrumpf mit einer darin ausgebildeten Passagierkabine, wobei der Fahrzeugrumpf meistens Fenster aufweist, durch die die Passagiere nach außen blicken können. Da das Anordnen eines Fensters in einem Fahrzeugrumpf mit dem Herstellen einer Fensteröffnung einhergeht, sind Maßnahmen zur Versteifung eines Randbereichs der betreffenden Fensteröffnung gewünscht. Hierzu werden oft die Fensterrahmen mechanisch entsprechend angepasst, so dass sie in der Lage sind, die beim Betrieb des Fahrzeugs im Randbereich der Fensteröffnung auftretenden Lasten aufzunehmen.

Bei Flugzeugen haben sich Fensterrahmen durchgesetzt, die eine Anordnung von winklig zueinanderstehenden Flanschen aufweisen. Es sind beispielsweise Fensterrahmen bekannt, die einen T-förmigen Profilquerschnitt aufweisen und die betreffende Fensteröffnung vollständig umlaufen. An einer Innenseite des Fensterrahmens kann eine Anordnung mehrerer Fensterscheiben mit einem die Fensterscheiben haltenden Dichtprofil untergebracht werden. Insbesondere bei Flugzeugen mit einem aus einem Faserverbundmaterial hergestellten Rumpf können jedoch Randbereiche einzelner Fensteröffnungen Materialdicken besitzen, die von den Randbereichen anderer Fensteröffnungen desselben Rumpfs abweichen. Zur Anpassung dieser unterschiedlichen Materialdicken sind stets individuell auf eine jeweils eine Materialdicke angepasste Fensterrahmen notwendig, die in die Fensteröffnungen eingesetzt werden. Dies ist notwendig, da alle Fensterrahmen zu einer vorbestimmten geometrischen Anordnung an der Außenseite der Fensteröffnung führen und an der Innenseite des Rumpfs durchgehende Referenzlinien zur Befestigung gewünscht sind. Dies ist insbesondere bei Fensterrahmen aus einem Faserverbundmaterial eine Herausforderung, da mehrere unterschiedliche Werkzeuge zur Fertigung der individuellen Fensterrahmen angefertigt werden müssen. Zudem ist die resultierende Teilevielfalt sehr hoch.

DE 10 2010 013 714 B4 offenbart ein Verfahren zum Bestücken einer Außenhaut aus einem faserverstärkten kunststoffbasierten Verbundmaterial eines Luftfahrzeugs mit einem Kabinenfenster, mit den Schritten des Anbindens eines Fensterrahmens aus einem faserverstärkten Verbundmaterial an einen Außenhautabschnitt zur Definition eines Fensterausschnitts, wobei der Fensterrahmen mit dem Außenhautabschnitt verklebt wird, und anschließend des Entfernens des Fensterausschnitts.

DE 10 2017 128 343 A1 offenbart ein Fensterhaltesystem für einen Fenstereinsatz in einem Flugzeug, umfassend einen Fensterrahmen und einen Fenstersatzhalter, wobei der Fensterrahmen einen Flansch, einen im Wesentlichen zum Inneren des Flugzeuges weisenden umlaufenden zylindermantelförmigen Rahmen und eine Mehrzahl an Stützbalken zur Aufnahme von Befestigungselementen zur Befestigung eines Klemmrings, der den Fenstereinsatz am Fenstersatzhalter befestigt, aufweist, wobei der Fensterrahmen mit der Flugzeugwand durch Verkleben verbunden ist.

### ZUSAMMENFASSUNG DER ERFINDUNG

Es ist eine Aufgabe der Erfindung, einen Fensterrahmen für ein Fahrzeug vorzuschlagen, der besonders gut und mit einem geringen Aufwand an eine Materialdicke eines Randbereichs einer Fensteröffnung angepasst werden kann, ohne eine Vielzahl von unterschiedlichen Werkzeugen und eine insgesamt hohe Teilevielfalt zu erzwingen.

Diese Aufgabe wird gelöst durch einen Fensterrahmen mit den Merkmalen des unabhängigen Anspruchs 1. Vorteilhafte Ausführungsformen und Weiterbildungen sind den Unteransprüchen und der nachfolgenden Beschreibung zu entnehmen.

Es wird ein Fensterrahmen für ein Fahrzeug vorgeschlagen, aufweisend eine Versteifungsrahmenkomponente und eine mit der Versteifungsrahmenkomponente koppelbare innere Halterahmenkomponente zum Aufnehmen mindestens eines Abschnitts eines Fensters, wobei die Versteifungsrahmenkomponente ein Profil mit einem Auflageabschnitt und einem sich hierzu senkrecht erstreckenden Innenflansch aufweist, wobei der Innenflansch einen Innenrand der Versteifungsrahmenkomponente bildet und der Auflageabschnitt eine sich radial von dem Innenrand nach außen erstreckende Auflagefläche zum Auflegen auf eine Randfläche einer Fensteröffnung bildet, wobei die innere Halterahmenkomponente ein Profil mit einem Kopplungsabschnitt und einem Verbindungsabschnitt aufweist, wobei der Kopplungsabschnitt dazu ausgebildet ist, auf den Innenflansch der Versteifungsrahmenkomponente aufgesetzt zu werden, und wobei der Verbindungsabschnitt eine Fläche zum Überlappen der Randfläche der Fensteröffnung bildet und an einer radial innenliegenden Begrenzung eine von dem Kopplungsabschnitt und dem Auflageabschnitt abgewandte Auskragung zum Umlaufen der Fensteröffnung an ihrer radial innenliegenden Seite aufweist.

Der erfindungsgemäße Fensterrahmen weist folglich zwei wesentliche Komponenten auf, die durch ihre Kombination einen individuell angepassten Fensterrahmen ergeben. Die Versteifungsrahmenkomponente ist primär für die Funktion der Versteifung vorgesehen. Der Innenflansch und der Auflageabschnitt sind hierzu winklig zueinander angeordnet, um entsprechende Flächenträgheitsmomente in einer oder mehreren Richtungen zu erzeugen. Der Innenflansch kann dabei insbesondere rechtwinklig zu dem Auflageabschnitt angeordnet sein.

Der Auflageabschnitt weist auf einer von dem Innenflansch abgewandten Seite bevorzugt eine gerade Kante auf, welche zum bündigen Auflegen auf die Randfläche der Fensteröffnung geeignet ist. Die in allen Profilquerschnitten gebildeten geraden Kanten liegen dabei auf jeweils einer korrespondierenden, radial verlaufenden Oberflächenlinie der Randfläche auf.

Der Innenflansch und der Auflageabschnitt können einen Übergangsbereich zueinander einschließen, der bevorzugt abgerundet ist. Insbesondere bei der Verwendung eines faserverstärkten Materials kann der Kraftfluss in den Fasern harmonisch und ohne Sprünge verlaufen. Auch die Enden des Innenflanschs und des Auflageabschnitts können rund oder abgerundet sein.

Der Kopplungsabschnitt der inneren Halterahmenkomponente dient ihrer Verbindung mit der Versteifungsrahmenkomponente. Hierzu sind beide Komponenten komplementär zueinander ausgestaltet. Der Kopplungsabschnitt weist eine Vertiefung oder eine Ausnehmung auf, in die der Innenflansch einführbar ist. Die Besonderheit des erfindungsgemäßen Fensterrahmens liegt insbesondere darin, ein üblicherweise einstückiges, T-förmiges Profil durch die beiden einzelnen Komponenten auszubilden, wobei durch Verwendung der Verbindung, die formschlüssig sein kann, eine leichte Anpassbarkeit der Form des Fensterrahmens erreichbar ist. Der Innenflansch kann mit unterschiedlichen Längen hergestellt werden, sodass hierdurch die Höhe des Profilquerschnitts variiert, was eine individuelle Anpassbarkeit an unterschiedliche Materialdicken im Bereich der Fensteröffnung erlaubt. Die Verbindung kann auf eine lockere, nicht klemmende Aufnahme der inneren Halterahmenkomponente durch die Versteifungsrahmenkomponente beschränkt sein.

Die Versteifungsrahmenkomponente und die innere Halterahmenkomponente könnten in einer zusammengesetzten Form weiterhin formschlüssig und/oder stoffschlüssig miteinander verbunden sein, falls gewünscht. Es kommen hierzu insbesondere Klebe- oder Schweißverfahren in Betracht. Das Verwenden eines Dichtmittels zwischen den beiden Komponenten könnte ebenso eine solche Verbindung hervorrufen. Es ist vorstellbar, den Innenflansch an allen Versteifungsrahmenkomponenten identisch vorzusehen und individuell vor dem Zusammensetzen anzupassen, d.h. zu kürzen. Nach individueller Anpassung des Innenflanschs kann dieser an dem inneren Halterahmen angeordnet und durch ein geeignetes Verbindungsverfahren mit diesem verbunden werden. So können trotz Herstellung lediglich einer Vielzahl gleichartiger Komponenten durch einfaches Anpassen der Innenflansche die gewünschte Vielzahl von unterschiedlichen Fensterrahmen bereitgestellt werden.

Der Kopplungsabschnitt weist eine Vertiefung auf, wobei ein Profil des Innenflanschs zumindest einen außenliegenden, geradlinigen Abschnitt aufweist, der in die Vertiefung steckbar ist. Der Innenflansch kann demnach durch Trimmen auf ein gewünschtes Maß den Fensterrahmen an die gewünschte Ausgestaltung anpassen. Da der außenliegende Abschnitt geradlinig ist, passt er nach dem Trimmen stets in die Vertiefung, wenn noch eine ausreichende Länge des geradlinigen Abschnittes übrig ist.

Die Vertiefung ist als ein Zwischenraum zwischen zwei parallel zueinander verlaufenden Abschnitten eines gebördelten Randes der inneren Halterahmenkomponente ausgebildet. Der Rand ist hierbei nach außen gebogen, sodass er über den Innenflansch und etwas über den Auflageabschnitt ragt. Somit entsteht eine Bördelung, bei der sich dann zwei um 180° umgebogene Abschnitte des Randes parallel einander gegenüberstehen. Damit ist ein Zwischenraum definiert, der den Innenflansch aufnehmen kann. Bevorzugt ist der Zwischenraum so ausgebildet, dass der Innenflansch mit seiner Endkante mit einem Innenrand der Umbördelung in Anschlag gerät. Anschließend kann eine stoffschlüssige Verbindung der beiden Komponenten durchgeführt werden.

Die Vertiefung könnte ein offenes Ende und ein geschlossenes Ende aufweisen, wobei das offene Ende einen abgerundeten Querschnitt umfasst. Der abgerundete Querschnitt wird durch eine gekrümmte Formgebung, beispielsweise durch Umformen eines faserverstärkten Kunststoffmaterials oder das Ablegen von Fasern auf einer gekrümmten Form mit einem bestimmten Biegeradius erreicht. Dadurch wird ein harmonischer Kraftfluss ermöglicht und die Fasern brechen nicht.

Wie vorangehend erwähnt ist der Innenflansch für jeden Fensterrahmen auf Maß zuschneidbar. Das Schneiden kann durch Abfräsen, Schleifen oder Sägen erreicht werden. Alternativ dazu kann auch ein Werkzeug zum Herstellen der Versteifungsrahmenkomponente zwei oder mehr variabel zueinander positionierbare Werkzeugabschnitte aufweisen, die eine Formgebung der Versteifungsrahmenkomponente, etwa durch Ablegen von faserverstärktem Kunststoff auf eine durch angepasste Relativpositionen der zwei oder mehr Werkzeugabschnitte angepassten Werkzeugoberfläche, mit einer variablen Länge des Innenflanschs erlauben.

Es ist vorteilhaft, wenn die Versteifungsrahmenkomponente einen L- oder J-förmigen Profilquerschnitt aufweist. Hierbei werden zwei im Wesentlichen senkrecht zueinanderstehende Schenkel eines Profilquerschnitts der Versteifungsrahmenkomponente bereitgestellt, die eine hohe Steifigkeit an der Randfläche einer Fensteröffnung bereitstellen. Die Wandstärke der Versteifungsrahmenkomponente kann konstant sein. Die L-Form kann im Profilquerschnitt zwei geradlinige Abschnitte aufweisen, wobei einer der Abschnitte dem Innenflansch zugeordnet ist und sich ein anderer Abschnitt, der Auflageabschnitt, senkrecht hierzu radial nach außen erstreckt. Bei der J-Form kann das radial außenliegende Ende des Profilquerschnitts einen Bogen aufweisen, der sich von dem Auflageabschnitt in eine Richtung parallel zu dem Innenflansch erstreckt. Der Bogen kann einen Krümmungsradius aufweisen, der dem Krümmungsradius zwischen dem Auflageabschnitt und dem Innenflansch entsprechen könnte.

In einer vorteilhaften Ausführungsform ist zwischen der Versteifungsrahmenkomponente und der inneren Halterahmenkomponente ein von dem Kopplungsabschnitt abgewandter Hohlraum gebildet. Die auf die Kraftflüsse orientierte Formgebung der Versteifungsrahmenkomponente weist eine abgerundete Form im Bereich der Auflagefläche auf. Schließt sich die innere Halterahmenkomponente an die Versteifungsrahmenkomponente an, füllt sie einen Zwischenraum zu dem gekrümmten Bereich der Versteifungsrahmenkomponente nicht gänzlich aus. Hierdurch entsteht ein Hohlraum. Diese ist für die Funktion des Fensterrahmens nicht erheblich, sondern kann stattdessen zur Einsparung von Gewicht führen.

Der Auflageabschnitt der Versteifungsrahmenkomponente und die Auskragung der inneren Halterahmenkomponente umfassen einen quer zu dem Auflageabschnitt gebildeten Versatz. Die Auskragung erstreckt sich demnach bei auf eine innere Randfläche der Fensteröffnung gesetztem Fensterrahmen weiter in radialer Richtung nach außen und überlappt sich zumindest teilweise mit einer Innenkante der Fensteröffnung. In einem Spalt zwischen der Auskragung und der Innenkante der Fensteröffnung kann Dichtmaterial eingebracht werden.

Der Fensterrahmen kann ferner eine äußere Halterahmenkomponente aufweisen, die an der inneren Halterahmenkomponente angeordnet ist und dazu ausgebildet ist, ein auf der inneren Halterahmenkomponente angeordnetes Fenster von einer der inneren Halterahmenkomponente abgewandten Seite auf die innere Halterahmenkomponente zu drücken. Die äußere Halterahmenkomponente muss nicht stoffschlüssig an der inneren Halterahmenkomponente angeordnet werden, sondern könnte über eine

Schraubverbindung damit verbunden sein. Hierzu könnten mehrere Ausnehmungen an der inneren Halterahmenkomponente angeordnet sein, durch die sich Bolzen oder andere Verbindungsmittel erstrecken.

Die Versteifungsrahmenkomponente und die innere Halterahmenkomponente können aus einem faserverstärkten Kunststoff gebildet sein. Der Lagenaufbau des Fensterrahmens kann im Wesentlichen dem eines üblichen, aus einem Faserverbundwerkstoff hergestellten Fahrzeugbauteils entsprechen. Hierbei sind mehrere Lagen aus Verstärkungsfasern vorgesehen, die in ein Matrixmaterial eingebettet sind. Die Verstärkungsfasern können als textiles Gebilde vorliegen, beispielsweise als mehrere Einzelfasern, als ein Gewebe, ein Gewirke oder ähnliches. Verstärkungsfasern können weiterhin Kohlefasern, Glasfasern, oder andere, zugfeste, faserförmige Materialien umfassen. Die Verstärkungsfasern können in lagenweise unterschiedlichen Richtungen angeordnet sein. In einzelnen Lagen können auch Verstärkungsfasern angeordnet sein, die gruppenweise in derselben Lage in unterschiedlichen Richtungen verlaufen. Damit lässt sich eine sehr hohe Festigkeit bei gleichzeitig geringem Gewicht erzielen. Der erfindungsgemäße Aufbau kann zudem den Aufwand reduzieren, da keine hohe Werkzeugvielfalt notwendig ist, um eine größere Anzahl unterschiedlicher Fensterrahmen zu erzeugen. Es ist besonders vorteilhaft, wenn der faserverstärkte Kunststoff aus demselben Kunststoff gebildet ist, wie der Rumpf des Fahrzeugs.

Weiterhin kann der faserverstärkte Kunststoff eine thermoplastische Matrix aufweisen. Diese könnte etwa Polyetherketonketon (PEKK), Polyetheretherketon (PEEK), Polyetherimid (PEI), Polycarbonat (PC), Polypropylen (PP) oder andere umfassen. Der Fensterrahmen ist bevorzugt wie ein herkömmliches Fahrzeugbauteil auf die entsprechende Einbaubedingung und einen zu erwartenden maximalen Lastfall angepasst. Durch die Verwendung der thermoplastischen Matrix können Umformprozesse eingesetzt werden, um aus einem beispielsweise flächigen Ausgangsmaterial die vorangehend beschriebenen Komponenten herzustellen.

Der Fensterrahmen kann in einer vorteilhaften Ausführungsform ferner mindestens ein Zentriermittel aufweisen, das an der Versteifungsrahmenkomponente anbringbar ist und dazu ausgebildet ist, die innere Halterahmenkomponente an der Versteifungsrahmenkomponente auszurichten. Das Zentriermittel kann als ein Stift ausgeführt sein, der an der Versteifungsrahmenkomponente angeordnet werden kann. Zum Ausrichten der inneren Halterahmenkomponente weist sie bevorzugt Aussparungen auf, die an die Form des mindestens einen Zentriermittels angepasst ist. Das mindestens eine Zentriermittel kann ein Formmerkmal, beispielsweise einen Stift, eine stiftartige Erweiterung oder ähnliches aufweisen, welches mit der Aussparung der inneren Halterahmenkomponente in Flächenkontakt bringbar ist.

In einer vorteilhaften Ausführungsform ist das mindestens eine Zentriermittel dazu ausgebildet, die äußere Halterahmenkomponente an der Versteifungsrahmenkomponente und/oder der inneren Halterahmenkomponente auszurichten. Das mindestens eine Zentriermittel kann dazu eine Aufnahme, etwa ein Gewinde, aufweisen, das mit einem Schraubmittel verbindbar ist, welches zum Fixieren der äußeren Halterahmenkomponente geeignet ist.

Weiterhin könnte die Versteifungsrahmenkomponente mindestens eine Aussparung zur Aufnahme eines Absatzes des mindestens einen Zentriermittels aufweisen. Damit kann das mindestens eine Zentriermittel an der Versteifungsrahmenkomponente präzise ausgerichtet werden. Der Absatz und die Aussparung sind dabei aneinander angepasst.

Die Erfindung betrifft ferner ein Luftfahrzeug, aufweisend einen Rumpf mit mindestens einer Fensteröffnung und mindestens einem Fensterrahmen nach der vorhergehenden Beschreibung.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
Fig. 1 zeigt einen Fensterrahmen in einer Schnittdarstellung.
Fig. 2a bis 2c zeigen den Fensterrahmen aus Fig. 1 in drei verschiedenen Höhen.
Fig. 3 zeigt einen Teilschnitt des Fensterrahmens.
Fig. 4 zeigt eine Explosionsdarstellung des Fensterrahmens nebst Fenster.
Fig. 5 zeigt den Fensterrahmen im eingebauten Zustand in einem Seitenschnitt.
Fig. 6 zeigt einen Fensterrahmen gemäß dem Stand der Technik.
Fig. 7a bis 7c zeigen die Versteifungsrahmenkomponente, die innere Halterahmenkomponente und die zusammengesetzten Komponenten in drei Ansichten.
Fig. 8 zeigt den Fensterrahmen in einer dreidimensionalen Schnittdarstellung.
Fig. 9a bis 9d zeigen Details des Zentriermittels in verschiedenen Schnittansichten.
Fig. 10a bis 10c zeigen Details eines weiteren Zentriermittels.
Fig. 11 zeigt eine Klickverbindung zwischen innerer Halterahmenkomponente und

Versteifungsrahmenkomponente. Eine solche Ausführungsform ist nicht Teil der Erfindung.

### DETAILLIERTE DARSTELLUNG EXEMPLARISCHER AUSFÜHRUNGSFORMEN

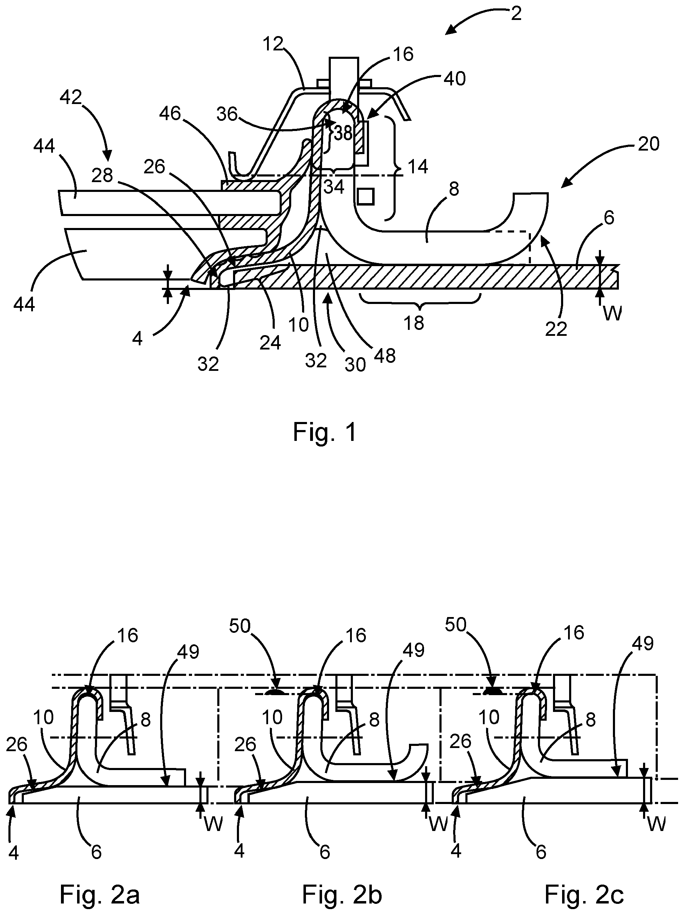

Fig. 1 zeigt einen Fensterrahmen 2 in einer Schnittdarstellung, der in eine Fensteröffnung 4 eines Fahrzeugrumpfs 6 eingesetzt ist. In diesem Fall ist der Fahrzeugrumpf 6 ein Flugzeugrumpf. Der Fensterrahmen 2 weist eine Versteifungsrahmenkomponente 8, eine innere Halterahmenkomponente 10 und eine äußere Halterahmenkomponente 12 auf. Die gezeigten Komponenten 8, 10 und 12 können aus einem faserverstärkten Kunststoff hergestellt sein.

Die Versteifungsrahmenkomponente 8 weist einen J-förmigen Profilquerschnitt auf. Ein Innenflansch 14 erstreckt sich lokal quer zu dem Fahrzeugrumpf 6 und weist eine abgerundete Endkante 16 auf. Ein Auflageabschnitt 18 erstreckt sich von dem Innenflansch 14 radial nach außen und steht beispielhaft weitgehend rechtwinklig hierzu. Ein radial außenliegendes Ende 20 der Versteifungsrahmenkomponente 8 kann einen Bogen 22 aufweisen, der sich von dem Auflageabschnitt 18 in eine Richtung parallel zu dem Innenflansch 14 erstreckt. Hierdurch wird eine J-Form gebildet. Alternativ könnte die Versteifungsrahmenkomponente 8 auch ein gerades, stumpfes außenliegendes Ende 20 aufweisen, was zu einer L-Form führt. Dies ist in Fig. 1 gestrichelt dargestellt und in den weiter nachfolgenden Figuren.

Die innere Halterahmenkomponente 10 weist einen Verbindungsabschnitt 24 auf, der eine Randfläche 26 der Fensteröffnung 4 überlappt. Hierbei entsteht ein Versatz zwischen dem Auflageabschnitt 18 und einer Auskragung 28 der inneren Halterahmenkomponente 10 in einer Richtung quer zu der Auflagefläche 18. Dieser Versatz entspricht etwa einer Wandstärke w des Fahrzeugrumpfs 6 in dem Bereich um die Fensteröffnung 4 herum, da sich die Auskragung 28 im Wesentlichen bis zu einer Außenseite 30 des Fahrzeugrumpfs 6 erstreckt.

Zwischen der Randfläche 26 der Fensteröffnung 4 und der Auskragung 28 der inneren Halterahmenkomponente 10 bzw. dem Verbindungsabschnitt 24 ist ein Dichtmaterial 32 angeordnet. Dies führt zu einer stoffschlüssigen Verbindung und einer glatten äußeren Oberfläche des Flugzeugrumpfs 4 ohne Wirbel erzeugende Kanten.

Die innere Halterahmenkomponente 10 weist ferner einen Kopplungsabschnitt 34 auf, der dazu ausgebildet ist, den Innenflansch 14 der Versteifungsrahmenkomponente 8 aufzunehmen. Hierzu weist der Kopplungsabschnitt 34 eine Vertiefung 36 auf, die hier als ein Zwischenraum zwischen zwei parallel zueinander verlaufenden Abschnitten 38 eines gebördelten Randes 40 der inneren Halterahmenkomponente 10 gebildet ist. Die parallele Anordnung der Abschnitte 38 ist sinnvoll, da der Innenflansch 14 beispielhaft mit einer konstanten Wandstärke ausgeführt ist und durch Trimmen auf eine gewünschte Höhe stets in die Vertiefung 36 steckbar ist. Hierdurch kann der Fensterrahmen 2 unterschiedliche Höhen quer zu dem Auflageabschnitt 18 aufweisen, ohne dass dedizierte, separate Werkzeuge zu der Herstellung notwendig sind.

Ein Fenster 42 mit Fensterscheiben 44 und einer Fensterdichtung 46 liegt auf dem Verbindungsabschnitt 24 der inneren Halterahmenkomponente 10 auf und wird von der inneren Halterahmenkomponente 10 gestützt. Die äußere Halterahmenkomponente 12 drückt auf die Fensterdichtung 46 und klemmt folglich das Fenster 42 zwischen der inneren Halterahmenkomponente 10 und der äußeren Halterahmenkomponente 12 fest.

Zwischen der inneren Halterahmenkomponente 10 und der äußeren Halterahmenkomponente 12 ist im Bereich an dem Rumpf 6 ein Hohlraum 48 gebildet. Dort kann an einer von dem Rumpf 6 abgewandten Bereich, an dem sich die innere Halterahmenkomponente 10 und die Versteifungsrahmenkomponente 8 berühren, ebenso Dichtmasse 32 eingebracht sein.

Wie Fig. 2a bis 2c zeigen, kann der Fensterrahmen 2 durch Trimmen des Innenflanschs 14 in seiner Höhe über dem Fahrzeugrumpf 6 angepasst werden. Fig. 2a zeigt den Fahrzeugrumpf 6 mit einer geringsten Wandstärke w. In Fig. 2b ist die Wandstärke w etwas größer, während in Fig. 2c die größte Wandstärke w gezeigt ist. Da der Verbindungsabschnitt 24 die Randfläche 26 der Fensteröffnungen 4 überlappen soll, rumpfinnenseitig jedoch eine nicht stufige, durchgehende Struktur zur Befestigung von Einbauten vorliegen soll, sind angepasste Fensterrahmen 2 notwendig. Diese werden, wie in den Fig. 2a bis 2c gezeigt, durch hieran angepasste Innenflansche 14 generiert. Die Höhen der Innenflansche 14 sinken im Verlauf von Fig. 2a bis 2c und führen folglich zu einer konstanten Erstreckung von einer Rumpfinnenseite 49 aus gesehen in das Rumpfinnere. Um dies zu erreichen wurde von den Innenflanschen 14 in Fig. 2b und 2c jeweils eine bestimmte Materialmenge 50 abgetragen.

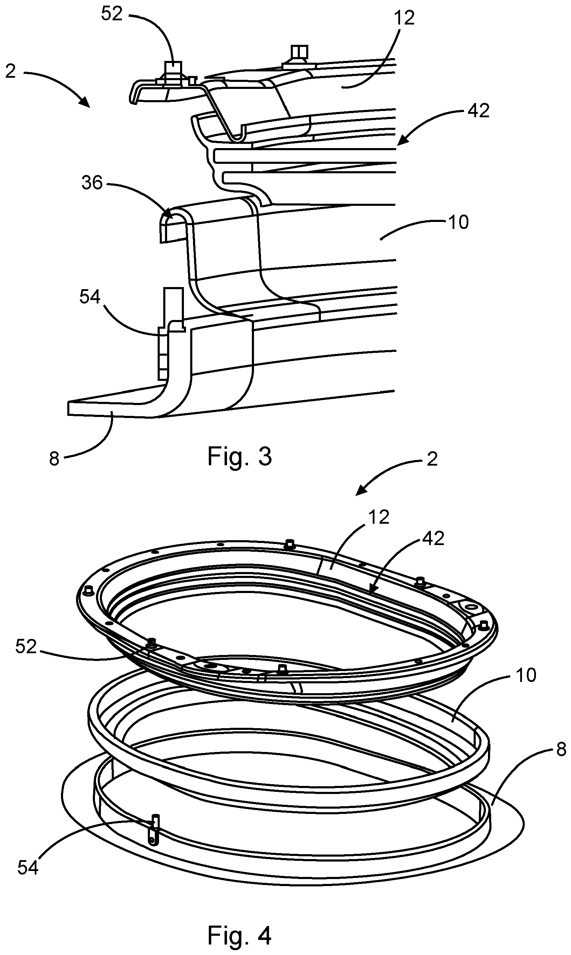

Fig. 3 zeigt einen Teilschnitt einer dreidimensionalen Darstellung des Fensterrahmens 2 mit einem dem Fenster 42. Die äußere Halterahmenkomponente 12 ist über Schraubmittel 52 an der Versteifungsrahmenkomponente 8 ausgerichtet und damit verbunden. Hierzu weist die Versteifungsrahmenkomponente 8 entsprechende Zentriermittel 54 auf, mit denen Schraubmittel 52 verbindbar sind.

Fig. 4 zeigt eine Explosionsdarstellung des Fensterrahmens 2 nebst Fenster 42. Die Komponenten 8, 10 und 12 sind so konzipiert, dass sie die entsprechende Fensteröffnung 4 vollständig umlaufen und bevorzugt einstückig ausgeführt sind.

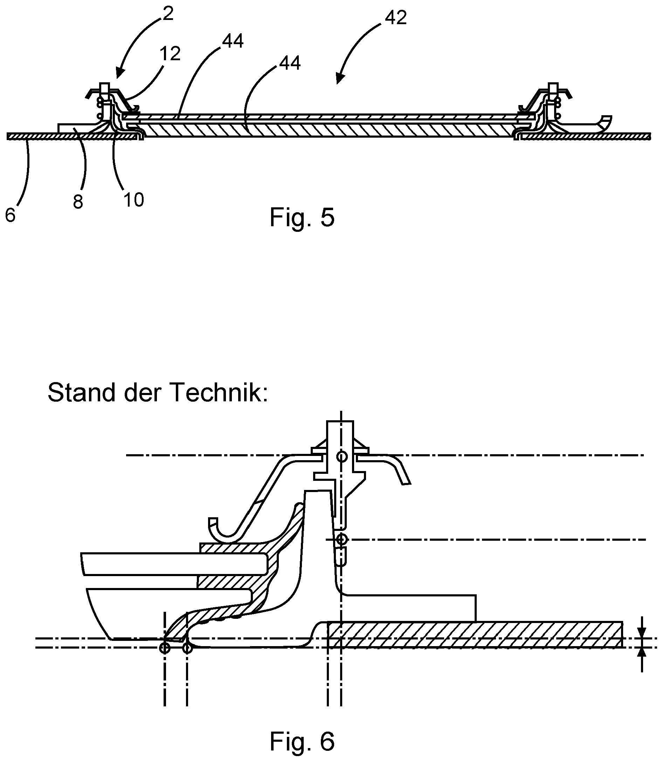

Fig. 5 zeigt den Fensterrahmen 2 nebst Fenster 42 im eingebauten Zustand in einem Seitenschnitt.

Fig. 6 zeigt einen herkömmlichen Fensterrahmen 56, der einen T-förmigen Profilquerschnitt aufweist. Da dieser Fensterrahmen 56 insgesamt einstückig aufgebaut ist, sind für die Realisierung bei unterschiedlichen Wandstärken gänzlich unterschiedliche Fensterrahmen 56 notwendig.

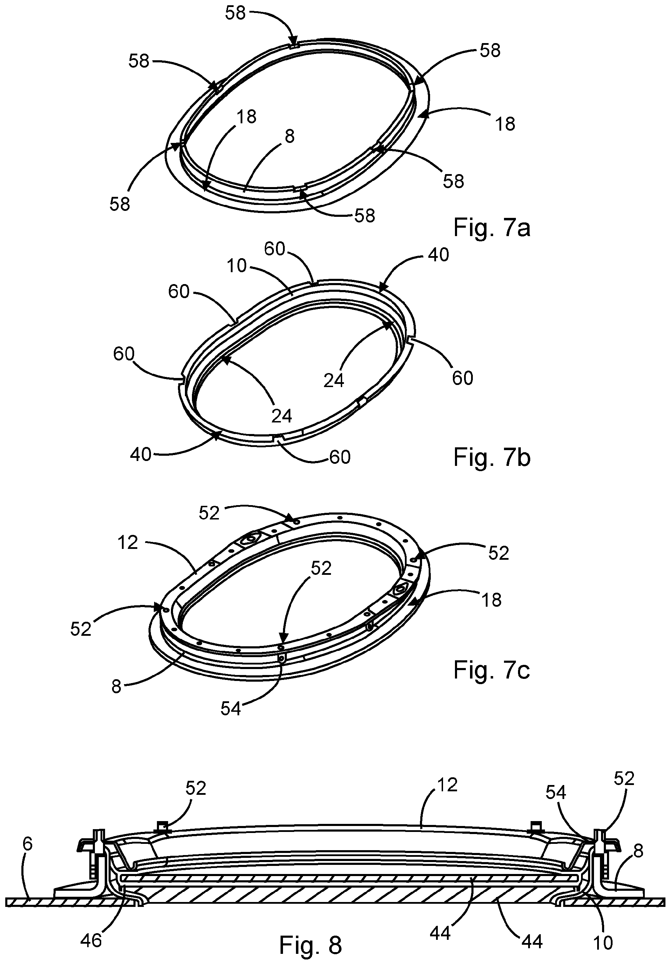

Fig. 7a zeigt die Versteifungsrahmenkomponente 8 in einer dreidimensionalen Ansicht. Hier sind Aussparungen 58 zu erkennen, in oder auf die die Zentriermittel 54 einsetzbar sind.

In Fig. 7b ist die innere Halterahmenkomponente 10 gezeigt, welche korrespondierende Aussparungen 60 aufweist, durch die sich die Zentriermittel 54 erstrecken können. Diese sind in dem Rand 40 angeordnet.

Fig. 7c zeigt die Versteifungsrahmenkomponente 8 mit aufgesetzter innerer Halterahmenkomponente 10, wobei sich die Zentriermittel 54 durch die Aussparungen 60 der inneren Halterahmenkomponente 10 erstrecken. Die Schraubmittel 52 sind damit verschraubt und halten damit die äußere Halterahmenkomponente 12 auf der inneren Halterahmenkomponente 10.

Fig. 8 zeigt eine Schnittdarstellung des Fensterrahmens 2 wie in Fig. 5, jedoch in einer leicht schräggestellten Ansicht zum verbesserten Verständnis.

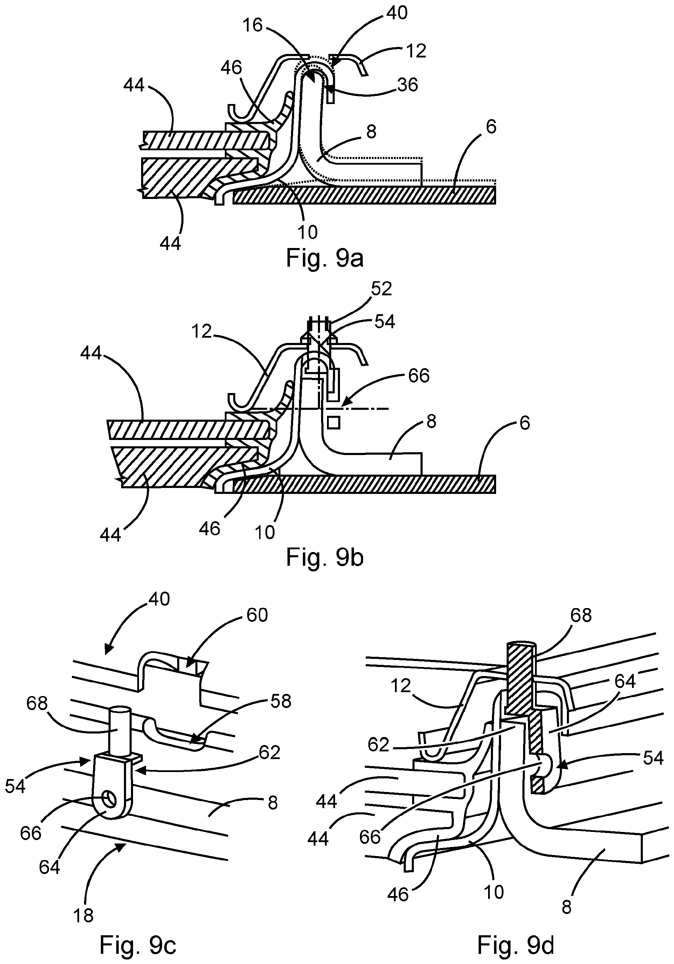

Fig. 9a zeigt eine Schnittdarstellung eines Bereichs des Fensterrahmens 2, in dem kein Zentriermittel 54 angeordnet ist. Fig. 9b zeigt indes eine äquivalente Schnittdarstellung eines Bereichs des Fensterrahmens 2, in dem Zentriermittel 54 positioniert ist.

Ein erstes Ausführungsbeispiel des dort gezeigten Zentriermittels 54 ist beispielhaft in den Fig. 9c und 9d gezeigt. Das Zentriermittel 54 weist einen Absatz 62 auf, der auf die Aussparung 58 gesetzt werden kann. Von dem Absatz erstreckt sich eine Lasche 64 in Richtung des Auflageabschnitts 18, wobei die Lasche ein Durchgangsloch 66 zum Fixieren des Zentriermittels 54, beispielsweise durch eine Sicherungsschraube (nicht gezeigt), aufweist. Ein längliches Aufnahmegewinde 68 erstreckt sich in eine entgegengesetzte Richtung und ist zur Aufnahme des Schraubmittels 52 ausgebildet.

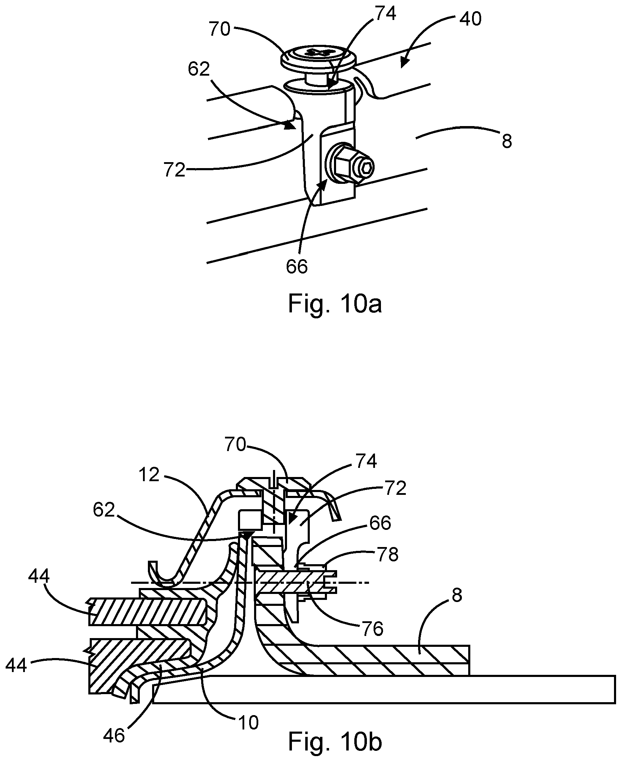

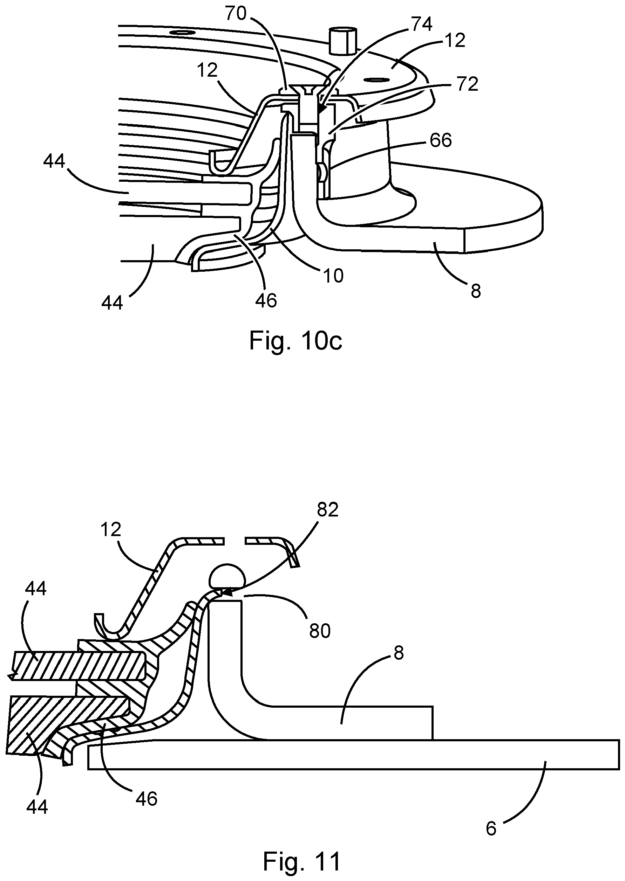

In den Fig. 10a bis 10c wird indes ein zweites Ausführungsbeispiel eines Schraubmittels 70 und eines Zentriermittels 72 gezeigt, die abweichend zu dem Schraubmittel 52 und dem Zentriermittel 54 gestaltet sind. Das Zentriermittel 72 weist statt eines länglichen Aufnahmegewindes 68 ein Innengewinde 74 auf, in das das Schraubmittel 70 einschraubbar ist, welches wie eine Schraube ausgestaltet ist. Das Zentriermittel 72 weist ebenso ein Durchgangsloch 66 auf, durch das eine Sicherungsschraube 76 ragt, die durch eine Mutter 78 gesichert ist. Dies kann jedoch auch mittels einer Nietverbindung realisiert sein.

Fig. 11 zeigt einen radialen Ausschnitt 80 in der Versteifungsrahmenkomponente 8, in den entsprechender Fortsatz 82 an der inneren Halterahmenkomponente 10 einrastbar ist. Die innere Halterahmenkomponente 10 kann an mehreren Stellen derartige Fortsätze 82 aufweisen, die in korrespondierend angeordnete Ausschnitte 80 einrastbar sind. Hierdurch kann eine Befestigung erreicht werden. Eine solche Ausführungsform ist nicht Teil der Erfindung.

Ergänzend sei darauf hingewiesen, dass "aufweisend" keine anderen Elemente oder Schritte ausschließt, und "ein" oder "eine" keine Vielzahl ausschließt. Bezugszeichen in den Ansprüchen sind nicht als Einschränkung anzusehen.

### BEZUGSZEICHEN

- 2: Fensterrahmen
- 4: Fensteröffnung
- 6: Fahrzeugrumpf
- 8: Versteifungsrahmenkomponente
- 10: innere Halterahmenkomponente
- 12: äußere Halterahmenkomponente
- 14: Innenflansch
- 16: Endkante
- 18: Auflageabschnitt
- 20: radial außenliegendes Ende
- 22: Bogen
- 24: Verbindungsabschnitt
- 26: Randfläche
- 28: Auskragung
- 30: Außenseite
- 32: Dichtmaterial
- 34: Kopplungsabschnitt
- 36: Vertiefung
- 38: parallele Abschnitte
- 40: Rand
- 42: Fenster
- 44: Fensterscheibe
- 46: Fensterdichtung
- 48: Zwischenraum
- 49: Rumpfinnenseite
- 50: Materialmenge (abgetragen)
- 52: erstes Schraubmittel
- 54: zweites Schraubmittel
- 56: herkömmlicher Fensterrahmen
- 58: Aussparung
- 60: Aussparung
- 62: Absatz
- 64: Lasche
- 66: Durchgangsloch
- 68: Aufnahmegewinde
- 70: erstes Schraubmittel
- 72: zweites Schraubmittel
- 74: Innengewinde
- 76: Sicherungsschraube
- 78: Mutter

- w: Wandstärke

## Patentansprüche

1. Fensterrahmen (2) für ein Fahrzeug, aufweisend:
- eine Versteifungsrahmenkomponente (8), und
- eine mit der Versteifungsrahmenkomponente (8) koppelbare innere Halterahmenkomponente (10) zum Aufnehmen mindestens eines Abschnitts eines Fensters,
wobei die Versteifungsrahmenkomponente (8) ein Profil mit einem Auflageabschnitt (18) und einem sich hierzu senkrecht erstreckenden Innenflansch (14) aufweist,
wobei der Innenflansch (14) einen Innenrand der Versteifungsrahmenkomponente (8) bildet und der Auflageabschnitt (18) eine sich radial von dem Innenrand nach außen erstreckende Auflagefläche zum Auflegen auf eine Randfläche (26) einer Fensteröffnung (4) bildet,
wobei die innere Halterahmenkomponente (10) ein Profil mit einem Kopplungsabschnitt (34) und einem Verbindungsabschnitt (24) aufweist,
wobei der Kopplungsabschnitt (34) dazu ausgebildet ist, auf den Innenflansch (14) der Versteifungsrahmenkomponente (8) aufgesetzt zu werden,
wobei der Verbindungsabschnitt (24) eine Fläche zum Überlappen mit der Randfläche (26) der Fensteröffnung (4) bildet und an einer radial innenliegenden Begrenzung eine von dem Kopplungsabschnitt (34) und dem Auflageabschnitt (18) abgewandte Auskragung (28) zum Umlaufen der Fensteröffnung (4) an ihrer radial innenliegenden Seite aufweist,
**dadurch gekennzeichnet, dass**
der Kopplungsabschnitt (34) eine Vertiefung aufweist, wobei ein Profil des Innenflanschs (14) zumindest einen außenliegenden, geradlinigen Abschnitt aufweist, der in die Vertiefung steckbar ist, und
die Vertiefung (36) als ein Zwischenraum zwischen zwei parallel zueinander verlaufenden Abschnitten (38) eines gebördelten Randes (40) der inneren Halterahmenkomponente (10) ausgebildet ist.

2. Fensterrahmen (2) nach Anspruch 1,
wobei die Vertiefung (36) ein offenes Ende und ein geschlossenes Ende aufweist, wobei das offene Ende einen abgerundeten Querschnitt umfasst.

3. Fensterrahmen (2) nach Anspruch 1 oder 2,
wobei der Innenflansch (14) für jeden Fensterrahmen (2) auf ein vorgegebenes Maß zuschneidbar ist.

4. Fensterrahmen (2) nach einem der vorhergehenden Ansprüche,
wobei die Versteifungsrahmenkomponente (8) einen L- oder J-förmigen Profilquerschnitt aufweist.

5. Fensterrahmen (2) nach einem der vorhergehenden Ansprüche,
wobei zwischen der Versteifungsrahmenkomponente (8) und der inneren Halterahmenkomponente (10) ein von dem Kopplungsabschnitt (34) abgewandter Hohlraum (48) gebildet ist.

6. Fensterrahmen (2) nach einem der vorhergehenden Ansprüche,
wobei der Auflageabschnitt (18) der Versteifungsrahmenkomponente (8) und die Auskragung (28) der inneren Halterahmenkomponente (10) einen quer zu dem Auflageabschnitt (18) gebildeten Versatz umfassen.

7. Fensterrahmen (2) nach einem der vorhergehenden Ansprüche,
ferner aufweisend eine äußere Halterahmenkomponente (12), die an der inneren Halterahmenkomponente (10) angeordnet ist und dazu ausgebildet ist, ein auf der inneren Halterahmenkomponente (10) angeordnetes Fenster (42) von einer der inneren Halterahmenkomponente (10) abgewandten Seite auf die innere Halterahmenkomponente (10) zu drücken.

8. Fensterrahmen (2) nach einem der vorhergehenden Ansprüche,
wobei die Versteifungsrahmenkomponente (8) und die innere Halterahmenkomponente (10) aus einem faserverstärkten Kunststoff gebildet sind.

9. Fensterrahmen (2) nach Anspruch 8,
wobei der faserverstärkte Kunststoff eine thermoplastische Matrix aufweist.

10. Fensterrahmen (2) nach einem der vorhergehenden Ansprüche,
ferner aufweisend mindestens ein Zentriermittel (54, 72), das an der Versteifungsrahmenkomponente (8) anbringbar ist und dazu ausgebildet ist, die innere Halterahmenkomponente (10) an der Versteifungsrahmenkomponente (8) auszurichten.

11. Fensterrahmen (2) nach Anspruch 10,
wobei das mindestens eine Zentriermittel (54, 72) dazu ausgebildet ist, die äußere Halterahmenkomponente (12) an der Versteifungsrahmenkomponente (8) und/oder der inneren Halterahmenkomponente (10) auszurichten.

12. Fensterrahmen (2) nach Anspruch 10 oder 11,
wobei die Versteifungsrahmenkomponente (8) mindestens eine Aussparung (58) zur Aufnahme eines Absatzes (62) des mindestens einen Zentriermittels (54, 72) aufweist.

13. Luftfahrzeug, aufweisend einen Rumpf mit mindestens einer Fensteröffnung (4) und mindestens einem Fensterrahmen (2) nach einem der vorhergehenden Ansprüche.

## Claims

1. Window frame (2) for a vehicle, comprising:
- a stiffening frame component (8), and
- an inner retaining frame component (10) coupleable to the stiffening frame component (8) for receiving at least a portion of a window,
wherein the stiffening frame component (8) comprises a profile with a support portion (18) and an inner flange (14) extending perpendicularly thereto,
wherein the inner flange (14) forms an inner edge of the stiffening frame component (8) and the support portion (18) forms a support surface extending radially outwardly from the inner edge for resting on an edge surface (26) of a window opening (4),
wherein the inner retaining frame component (10) comprises a profile with a coupling portion (34) and a connecting portion (24),
wherein the coupling portion (34) is formed to be fitted onto the inner flange (14) of the stiffening frame component (8),
wherein the connecting portion (24) forms a surface for overlapping with the edge surface (26) of the window opening (4) and comprises, at a radially inner boundary thereof, a projection (28) facing away from the coupling portion (34) and the support portion (18) for surrounding the window opening (4) at its radially inner side,
**characterized in that**
the coupling portion (34) comprises a recess, wherein a profile of the inner flange (14) comprises at least one outwardly extending rectilinear portion which is insertable into the recess, and
the recess (36) is formed as an intermediate space between two portions (38), extending parallel to each other, of a flanged edge (40) of the inner retaining frame component (10).

2. Window frame (2) according to claim 1,
wherein the recess (36) comprises an open end and a closed end, wherein the open end comprises a rounded cross-section.

3. Window frame (2) according to claim 1 or 2,
wherein the inner flange (14) is cuttable to a predetermined dimension for each window frame (2) .

4. Window frame (2) according to one of the preceding claims,
wherein the stiffening frame component (8) comprises an L- or J-shaped profile cross-section.

5. Window frame (2) according to one of the preceding claims,
wherein a cavity (48) facing away from the coupling portion (34) is formed between the stiffening frame component (8) and the inner retaining frame component (10).

6. Window frame (2) according to one of the preceding claims,
wherein the support portion (18) of the stiffening frame component (8) and the projection (28) of the inner retaining frame component (10) comprise an offset formed transversely to the support portion (18).

7. Window frame (2) according to one of the preceding claims,
further comprising an outer retaining frame component (12) arranged at the inner retaining frame component (10) and formed to press a window (42) arranged on the inner retaining frame component (10) from a side facing away from the inner retaining frame component (10) onto the inner retaining frame component (10).

8. Window frame (2) according to one of the preceding claims,
wherein the stiffening frame component (8) and the inner retaining frame component (10) are formed of a fiber-reinforced plastic material.

9. Window frame (2) according to claim 8,
wherein the fiber-reinforced plastic comprises a thermoplastic matrix.

10. Window frame (2) according to one of the preceding claims,
further comprising at least one centering means (54, 72) that is attachable to the stiffening frame component (8) and formed to align the inner retaining frame component (10) at the stiffening frame component (8).

11. Window frame (2) according to claim 10,
wherein the at least one centering means (54, 72) is formed to align the outer retaining frame component (12) at the stiffening frame component (8) and/or the inner retaining frame component (10).

12. Window frame (2) according to claim 10 or 11,
wherein the stiffening frame component (8) comprises at least one recess (58) for receiving a shoulder (62) of the at least one centering means (54, 72).

13. Aircraft comprising a fuselage with at least one window opening (4) and at least one window frame (2) according to one of the preceding claims.

## Revendications

1. Cadre de fenêtre (2) pour un véhicule, comprenant :
- un composant de cadre de renforcement (8), et
- un composant de cadre de support interne (10) pouvant être couplé au composant de cadre de renforcement (8) pour recevoir au moins une partie d'une fenêtre,
le composant de cadre de renforcement (8) présentant un profilé avec une partie d'appui (18) et une bride intérieure (14) s'étendant perpendiculairement à celle-ci,
la bride intérieure (14) formant un bord intérieur du composant de cadre de renforcement (8) et la partie d'appui (18) formant une surface d'appui s'étendant radialement vers l'extérieur à partir du bord intérieur pour être posée sur une surface de bord (26) d'une ouverture de fenêtre (4),
le composant de cadre de support interne (10) présentant un profil avec une partie d'accouplement (34) et une partie de liaison (24),
la partie d'accouplement (34) étant adaptée pour être placée sur la bride intérieure (14) du composant de cadre de renforcement (8),
la partie de liaison (24) formant une surface destinée à chevaucher la surface de bord (26) de l'ouverture de fenêtre (4) et présentant, sur une limite radialement intérieure, une saillie (28) opposée à la partie de couplage (34) et à la partie d'appui (18) pour entourer l'ouverture de fenêtre (4) sur son côté radialement intérieur,
**caractérisé en ce que**
la partie d'accouplement (34) comporte un évidement, un profil de la bride intérieure (14) comportant au moins une partie rectiligne extérieure qui peut être insérée dans l'évidement, et
le renfoncement (36) étant réalisé sous la forme d'un espace intermédiaire entre deux parties (38) parallèles l'une à l'autre d'un bord rabattu (40) du composant de cadre de support interne (10).

2. Cadre de fenêtre (2) selon la revendication 1,
dans lequel la cavité (36) a une extrémité ouverte et une extrémité fermée, l'extrémité ouverte comprenant une section transversale arrondie.

3. Cadre de fenêtre (2) selon la revendication 1 ou 2,
la bride intérieure (14) pouvant être découpée à une dimension prédéterminée pour chaque cadre de fenêtre (2).

4. Cadre de fenêtre (2) selon l'une des revendications précédentes,
dans lequel le composant de cadre de renforcement (8) présente une section transversale de profilé en forme de L ou de J.

5. Cadre de fenêtre (2) selon l'une des revendications précédentes,
dans lequel un espace creux (48) est formé entre le composant de cadre de renforcement (8) et le composant de cadre de support interne (10), à l'opposé de la partie d'accouplement (34).

6. Cadre de fenêtre (2) selon l'une des revendications précédentes,
dans lequel la partie d'appui (18) du composant de cadre de renforcement (8) et la saillie (28) du composant de cadre de support interne (10) comprennent un décalage formé transversalement à la partie d'appui (18).

7. Cadre de fenêtre (2) selon l'une des revendications précédentes,
comprenant en outre un composant de cadre de support externe (12) disposé sur le composant de cadre de support interne (10) et adapté pour presser une fenêtre (42) disposée sur le composant de cadre de support interne (10) sur le composant de cadre de support interne (10) depuis un côté opposé au composant de cadre de support interne (10).

8. Cadre de fenêtre (2) selon l'une des revendications précédentes,
dans lequel le composant de cadre de renforcement (8) et le composant de cadre de support interne (10) sont formés d'une matière plastique renforcée par des fibres.

9. Cadre de fenêtre (2) selon la revendication 8,
dans lequel la matière plastique renforcée par des fibres comprend une matrice thermoplastique.

10. Cadre de fenêtre (2) selon l'une quelconque des revendications précédentes,
comprenant en outre au moins un moyen de centrage (54, 72) pouvant être fixé au composant de composant de cadre de renforcement (8) et adapté pour aligner le composant de cadre de support interne (10) avec le composant de composant de cadre de renforcement (8).

11. Cadre de fenêtre (2) selon la revendication 10,
dans lequel ledit au moins un moyen de centrage (54, 72) est adapté pour aligner ledit composant de cadre de support externe (12) avec ledit composant de composant de cadre de renforcement (8) et/ou ledit composant de cadre de support interne (10).

12. Cadre de fenêtre (2) selon la revendication 10 ou 11,
dans lequel le composant de cadre de renforcement (8) a au moins un évidement (58) pour recevoir un épaulement (62) du au moins un moyen de centrage (54, 72).

13. Aéronef ayant un fuselage avec au moins une ouverture de hublot (4) et au moins un cadre de hublot (2) selon l'une des revendications précédentes.
